# EUROPEAN PATENT SPECIFICATION

(11) **EP 1 426 339 B1**
(45) Date of publication and mention of the grant of the patent: **16.11.2005**
(21) Application number: 03012450.7
(22) Date of filing: 30.05.2003
(51) Int. Cl.: C03B 37/012, C03B 37/027

(54) **Rod-in-tube optical fibre preform and methods of manufacturing and drawing it**
Stab-in-Rohr Vorform für optische Fasern und Verfahren zum Herstellen und Ziehen dergleichen
Préforme à barre-en-tube pour des fibres optiques et procédés de fabrication et d'étirage de la préforme

(30) Priority: 04.12.2002 US 309852
(43) Date of publication of application: 09.06.2004
(73) Proprietor: FITEL USA CORPORATION (a Delaware Corporation), Norcross, Georgia 30071 (US)
(72) Inventor: Fletcher III, Joseph P.,, Marietta, Georgia 30068 (US); Miller, Thomas J., Alpharetta, Georgia 30022 (US); Rennell, John Ambrose, Jr., Suwanee, Georgia 30024 (US); Smith, Don Hartman, Atlanta, Georgia 30345 (US); Bauer, Peter, 63533 Mainhausen (DE); Cibis, Norbert, 63796 Kahl/Main (DE); Sattmann, Ralph, 63739 Aschaffenburg (DE); Sowa, Rene, 06774 Pouch (DE)
(74) Representative: Schoppe, Fritz

(56) References cited:
- EP-A- 1 129 999
- EP-A- 1 188 724
- WO-A-99/09437
- WO-A-03/095379
- PATENT ABSTRACTS OF JAPAN vol. 2002, no. 07, 3 July 2002 (2002-07-03) -& JP 2002 080238 A (SUMITOMO ELECTRIC IND LTD), 19 March 2002 (2002-03-19)
- PATENT ABSTRACTS OF JAPAN vol. 012, no. 082 (C-481), 15 March 1988 (1988-03-15) -& JP 62 216933 A (OCEAN CABLE CO LTD), 24 September 1987 (1987-09-24)
- PATENT ABSTRACTS OF JAPAN vol. 006, no. 214 (C-131), 27 October 1982 (1982-10-27) -& JP 57 118042 A (SHOWA DENSEN DENRAN KK), 22 July 1982 (1982-07-22)

## Description

### BACKGROUND OF THE INVENTION

### Field of the Invention

This invention relates to optical fiber preforms and their manufacture, and particularly to such preforms of the rod-in-tube (RIT) variety. The invention also concerns a method of drawing an optical fiber using a RIT preform.

### Discussion of the Known Art

Optical fibers for data and information transmission are commonly produced by inserting one end of a glass fiber preform rod into the mouth of a vertical fiber draw furnace, and heating the inserted end of the rod as it descends into a hot zone of the furnace. A soft glass drop is formed at the end of the rod from which an optical fiber is then drawn. The preform rod itself may be produced, e.g., by a modified chemical vapor deposition (MCVD) process by which the rod acquires a refractive core region extending axially of the rod, and a cladding region which surrounds the core region. See U.S. Pat. 4,217,027 (Aug. 12, 1980), all relevant portions of which are incorporated by reference.

As disclosed in the '027 patent, preform rods produced by the MCVD process involve the passage of gases such as SiCl₄ and GeCl₄ axially through a hollow silica glass tube. The tube is rotated about its axis and simultaneously heated from outside by a torch while the gases pass inside the tube, thus causing a layer of submicron sized glass particles to be deposited on the tube's inner circumference. By moving the torch repeatedly along the long direction of the tube, multiple layers of glass particles are deposited inside the tube. Once a determined number of layers are formed, the tube is heated again until it softens and collapses into the shape of a solid rod with the deposited glass particles forming the core region and the collapsed glass tube forming the cladding region.

The described MCVD process does, however, impose a limit on the maximum wall thickness of the glass tube. That is, as the wall thickness increases, the rate at which heat is transferred from the outside moving torch to the reactant-containing gases inside the tube, decreases. If sufficient heat transfer does not occur, bubbles or incomplete sintering can occur in the deposited glass layers. To overcome this condition, the rate at which the outside torch moves is decreased, thereby increasing the overall time needed to deposit each glass particle layer. Yet, the greatest tube wall thickness that a given MCVD process can tolerate still may not be adequate to yield a sufficient amount of cladding on the drawn fiber for certain applications. This problem is overcome by the rod-in-tube (RIT) method.

In the RIT method, a preform rod made, for example, according to a MCVD process is inserted axially within a so-called glass overclad tube. The overclad tube is heated so as to soften and collapse onto the preform rod, wherein the tube glass consolidates with the cladding on the preform rod. An optical fiber having an outer (cladding) diameter greater than that which could be attained from the MCVD preform rod alone, is then drawn from the combined preform rod and overclad tube. This process is also sometimes referred to as overclad during draw or ODD. See also EP 1 129 999 A2.

According to the method disclosed in the mentioned EP 1 129 999 A2 application, a preform rod is positioned inside a first overclad tube, and a second overclad tube is disposed over the first overclad tube. The preform rod and the overclad tubes are heated under such conditions as to cause a partial collapse of the tubes at one end of the rod, thus forming a unitary multiple overclad preform rod. The one end of the overclad rod is later set up for insertion into a vertical fiber draw furnace, and an ODD fiber having a desired outer diameter and core-to-cladding mass ratio is produced as remaining portions of the tubes collapse and consolidate with the cladding on the rod.

The preform rod may also be provided in the form of a solid glass rod comprised of desired core material only, with the overclad tube(s) serving as the only source of cladding material on the fibers to be drawn. Accordingly, the preform rod as described above in connection with the RIT process will be referred to hereafter simply as a "core rod", whether the rod is formed to have an outer layer of cladding material, or is comprised solely of core material.

A problem that arises when carrying out the known RIT methods concerns the additional heating step prior to fiber draw, wherein the preform comprising a core rod and one or more coaxial overclad tubes is consolidated and sealed at the one end to hold the rod and surrounding tubes together for insertion into the draw furnace during start-up. This preliminary step is not desirable since it entails a significant added expense, viz., capital intensive overclad lathes, and heat source and material handling equipment. The step also produces significant stress in the preform glass when it cools and is then later re-heated in the fiber draw furnace. Such stresses create a high tendency for the preform to crack and fracture, and greatly increase repair rates, scrap and waste. Further, in an attempt to alleviate the problem, special measures must be implemented such as, e.g., increasing the insertion time of the preform in the draw furnace when drawing fiber.

EP 1188724 A1 relates to a process for fabricating a preform for optical fibers by a rod-in-tube method. A core rod assembly comprising a core rod and a bushing attached at an end of the assembly is provided. The core rod assembly is inserted into an unsintered overcladding tube, and secured to the tube such that the core rod assembly is suspended within. The overcladding tube and the core rod assembly are heated to sinter the overcladding tube and thereby form a preform assembly. During the heating step, the bushing comes into contact with the interior of the overcladding tube, and, because the bushing has a larger diameter than the core rod, an annular gap is maintained between the core rod assembly and the interior of the overcladding tube.

JP 200280238 relates to a base material for an optical fiber and to a method of forming the same. The base material for the optical fiber has a specified tip profile just before the fiber drawing, wherein the base material is formed by a method comprising processing by grinding or drawing so that the particular tip profile is obtained.

It is the object of the present invention to provide an optical fiber preform, a method of drawing an optical fiber and a method of manufacturing an optical fiber preform, which permit reduction of stresses in the preform.

This object is achieved by an overclad optical fiber preform according to claim 1 and methods according to claims 10 and 17; with dependent claims 2-9, 11-16 and 18-22 defining further options.

According to the invention, an overclad optical fiber preform includes a core rod, and an overclad tube having a first open end and a second open end opposite the first open end. The first open end of the overclad tube is dimensioned to enter into a mouth of a vertical fiber draw furnace. A plug is supported within the first open end of the tube, and the core rod is disposed axially inside the tube so that a distal (i.e., lower) end of the rod is restrained from downward movement by the plug when the first open end of the tube enters the mouth of the draw furnace and descends into a hot zone of the furnace.

According to another aspect of the invention, a method of drawing an optical fiber includes inserting a core rod inside an overclad tube, inserting a plug in an open distal end of the overclad tube, and fixing the plug in the vicinity of the distal end. The distal end of the overclad tube is positioned for insertion into a mouth of a vertical fiber draw furnace. The overclad tube descends into and is heated by the draw furnace until the plug and the tube soften and fuse with one another. The tube then collapses onto the core rod to produce a drop from which an optical fiber having desired properties may be drawn.

For a better understanding of the invention, reference is made to the following description taken in conjunction with the accompanying drawing and the appended claims.

### BRIEF DESCRIPTION OF THE DRAWING

In the drawing:
FIG. 1 is a cross-sectional view in elevation of a lower portion of a rod-in-tube (RIT) preform according to the invention;
FIG. 2 is an elevation view of the lower portion of the RIT preform as seen when rotated 90 degrees about its axis with respect to the orientation of the preform in FIG. 1, and about to be set up for insertion into a mouth of a vertical fiber draw furnace;
FIG. 3 is a cross-sectional view in elevation, showing the lower portion of the RIT preform after descending into a hot zone inside the furnace in FIG. 3, to produce a drop for fiber draw;
FIG. 4 is a diagram showing steps of a method of drawing an optical fiber according to the invention; and
FIG. 5 is a cross-sectional view similar to FIG. 1, and showing a second tube in a position coaxial with and intermediate the rod and the tube shown in FIG. 1.

### DETAILED DESCRIPTION OF THE INVENTION

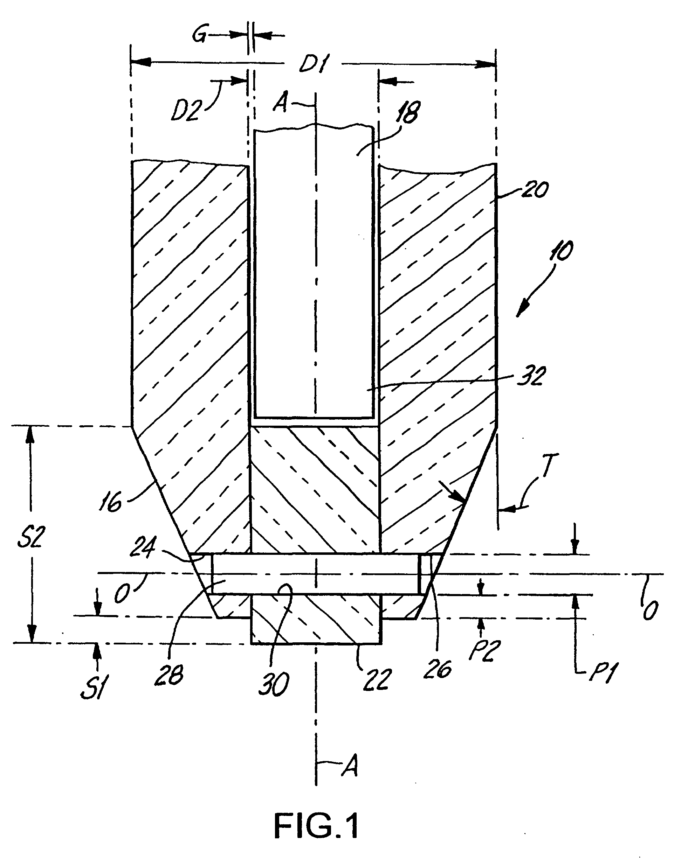

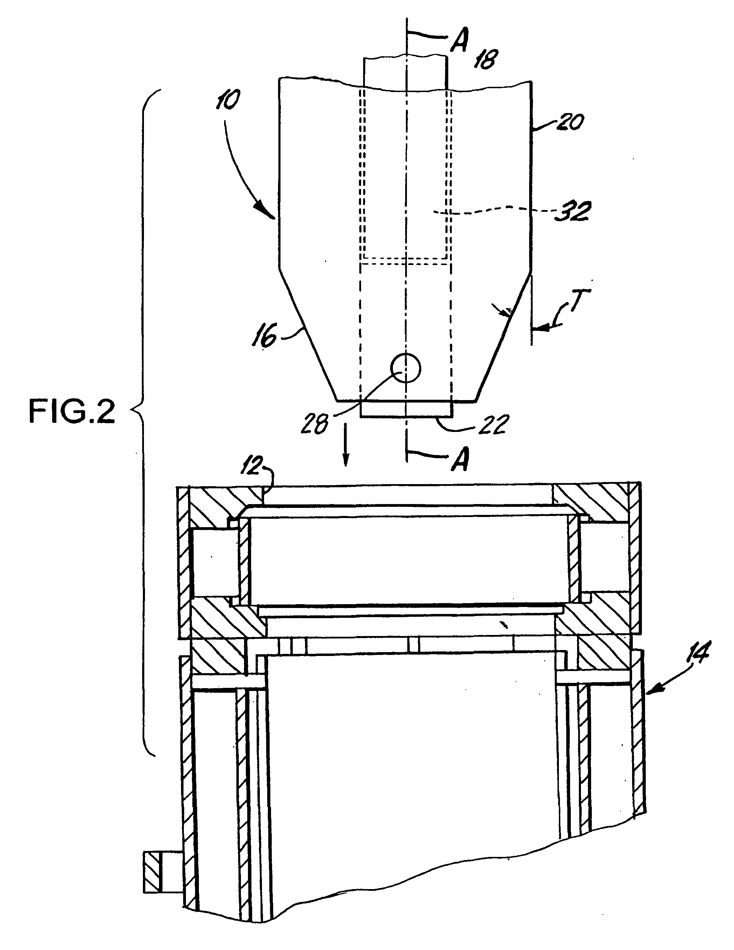

FIG. 1 shows a cross section of a lower portion of a rod-in-tube (RIT) optical fiber preform 10 according to the invention. FIG. 2 shows the lower portion of the preform 10 in elevation, as seen when rotated 90 degrees about its long axis A with respect to the position in FIG. 1.

In the illustrated embodiment, the fiber preform 10 includes a core rod 18 and a glass overclad tube 20, lower portions of which are shown in FIGS. 1 and 2. The rod 18 may be obtained by the above described MCVD or by an equivalent process such as, without limitation, vapor axial deposition (VAD) or outside vapor deposition (OVD). Also, as mentioned earlier, rod 18 may be formed solely of a desired core material. The overclad tube 20 may be obtained as a commercially available silica glass tube. The circumference of the lower or distal end of the tube 20 is preferably formed to a frustoconical shape with a radially inward taper T of, e.g., approximately 24 degrees. As represented in FIG. 2, a distal or lower end 16 of the entire fiber preform 10 can be positioned as a stable mechanical assembly for insertion into a mouth 12 of a vertical fiber draw furnace 14 at the start of a fiber draw process.

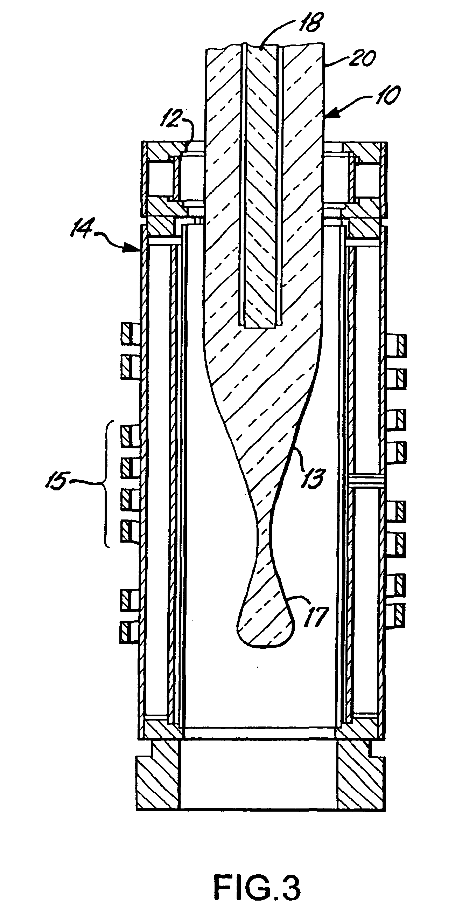

The taper angle T approximates a neck down inclination 13 that is assumed by the lower end 16 of the preform 10 when it softens in a hot zone 15 of the fiber draw furnace 14 to form a glass drop 17, as seen in FIG. 3. A proper choice for the taper angle T can maximize the usable axial length of the preform 10 for fiber draw, and may also minimize the size of the drop 17 and thereby facilitate the initiation of fiber draw from the preform.

A cylindrical plug 22 is supported inside the open distal end of the glass overclad tube 20. The plug 22 is formed, e.g., from commercially available natural or synthetic fused silica, or equivalent material. Openings 24, 26 are drilled or otherwise formed through the conically shaped wall of the tube 20 at diametrically opposed locations at the distal end of the tube, and along an axis O (see FIG. 1) perpendicular to the tube axis A. The plug 22 is fixed with respect to the tube 20 by a pin 28 which is inserted through one of the openings 24, 26, and passes through a transverse bore 30 in the plug to engage the opposite one of the openings 26, 24 in the tube wall. The pin 28 is formed, e.g., from commercially available synthetic fused silica or equivalent material.

During assembly of the preform 10, the overclad tube 20 may be supported horizontally, and an upper end (not shown) of the rod 18 is inserted axially into the open, distal end of the tube 20. Preferably, the rod 18 and the tube 20 are dimensioned so that a radial clearance gap G of, e.g., 1 mm +/- 0.5 mm exists between the inner periphery of the overclad tube 20 and the outer periphery of the inserted rod 18. The plug 22 is then placed into the distal end of the tube 20 so that opposite ends of the plug bore 30 register with the openings 24, 26 in the tapered tube wall, and the pin 28 is inserted as explained above.

When the assembled RIT optical fiber preform 10 is vertically oriented as shown in FIG. 2 for set up prior to insertion in the furnace 14, a distal (i.e., lower) end 32 of the rod 18 is blocked by the plug 22 from sliding below the distal end of the tube 20. After descending through the mouth 12 of the draw furnace and entering the hot zone 15 as shown in FIG. 3, the distal end 16 of the preform is heated to a temperature (typically 2100 degrees C. or more) at which the glass softens and the plug 22, pin 28 and tube 20 tube collapse and fuse to one another. Further, the distal end 32 of the core rod 18 and the portion of the tube 20 above the plug 22 soften, and the tube collapses onto the rod to produce the drop 17. Such collapse may be assisted by communicating a partial vacuum of, for example, about -26 inches H_{g} to the clearance gap G between the rod 18 and the tube 20 at an upper end of the preform 10 in a manner typically employed when carrying out conventional RIT processes. Once the drop 17 is produced, a continuous optical fiber may then be drawn in a conventional manner.

In accordance with the invention, the RIT preform 10 is assembled in a relatively simple manner with no requirement for joining a part of the overclad tube 20 to the core rod 18 by a separate heating step prior to fiber draw. By eliminating the prior heating step, manufacturing costs are significantly reduced and the yield obtained from the preform 10 increases. Moreover, various preform sizes and fiber types (e.g., single or multi-mode) can be realized by the present invention.

Typical dimensions and taper angles for the assembled RIT preform 10, given in the following Tables I and II with reference to FIG. 1, show that a wide range of preform sizes may be accommodated.

**Table I**

| Dimension | Millimeters (typ.) |
|---|---|
| D1 (O.D. of tube 20 above tapered portion) | 60 to 200 |
| D2 (I.D. of tube 20) | 20 to 75 |
| S1 (axial length of exposed end of plug 22) | 10 |
| S2 (axial length of plug 22) | (axial length of tapered portion + S1) |
| P1 (diameter of pin 28) | 10 to 16 |
| P2 (axial spacing between bottom of pin | 10 |
| bore 30 and distal end of tube 20) | |

**Table II**

| Taper Angle | Degrees (approx.) |
|---|---|
| T | 24 to 27 |

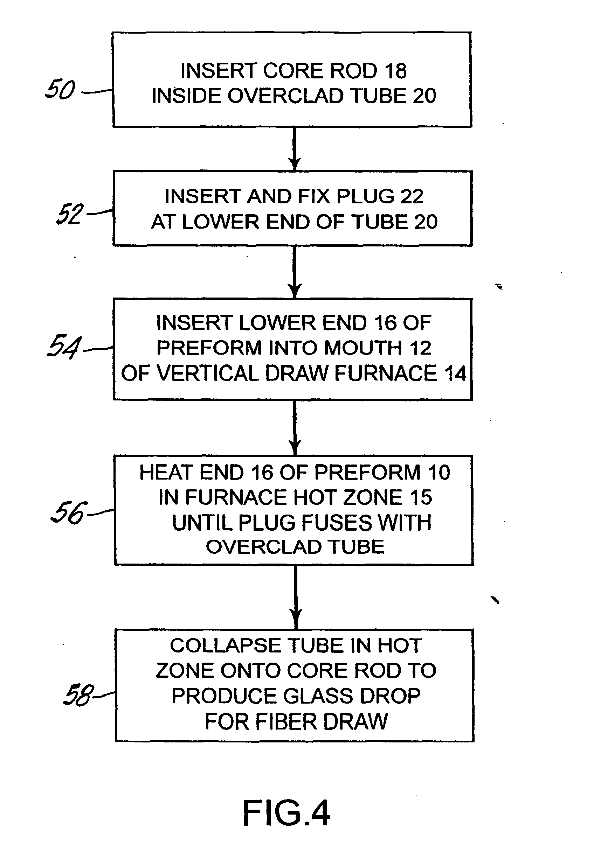

FIG. 4 shows steps of a method of drawing an optical fiber according to the invention. In step 50, the core rod 18 is inserted axially inside the overclad tube 20. The plug 22 is inserted and fixed (e.g., by way of the pin 28) at the distal end of the tube 20, in step 52, so that a distal end of the rod 18 is blocked by the plug from exiting the distal end of the tube. In step 54, the distal end 16 of the assembled preform 10 is inserted into the mouth 12 of the draw furnace 14. The distal end 16 descends into the furnace hot zone 15 and is heated in step 56 until the plug 22 fuses with the tube 20. In step 58, the tube collapses onto the softened rod 18 to produce a drop for initiating a draw of an optical fiber having desired properties.

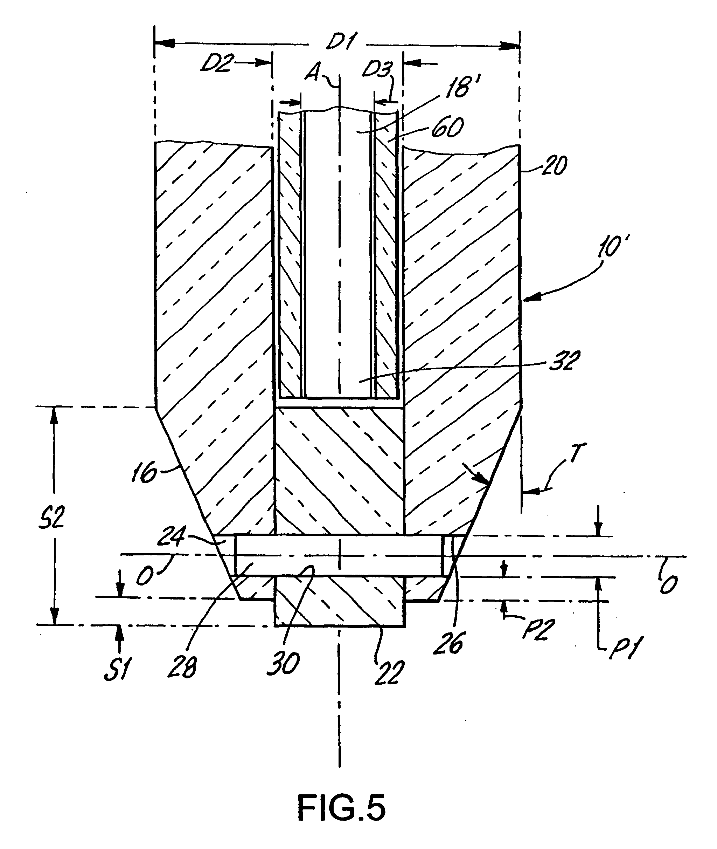

In addition to the single overclad tube 20, one or more additional overclad tubes may be fixed coaxially about the tube 20 so as to initiate a multiple overclad fiber draw process. For example, in FIG. 5 a lower portion of a second or inner overclad tube 60 in an optical fiber preform 10' according to the invention, is shown in a position coaxial with a rod 18' and intermediate the rod 18' and the overclad tube 20. Thus, the tube 60 and the rod 18' are both restrained from downward movement relative to the tube 20, by the plug 22.

The inner overclad tube 60 in FIG. 5 has such an inner diameter D3 as to establish a radial clearance gap (e.g., about 1 mm +/- 0.5 mm) with the rod 18'. A partial vacuum may then be communicated to the radial gap between the rod 18' and the inner overclad tube 60 as well as to the gap between the tube 60 and the outer overclad tube 20, in order to assist the collapse of both tubes 20, 60 onto one another and onto the rod 18' when the preform 10' is heated in the draw furnace 14.

Because it is important that the core rod 18 and its associated overclad tube(s) be fed together at the same rate into the furnace 14 during the fiber draw process, it may in some instances be necessary to provide means for blocking potential upward vertical axial movement or slippage of the rod 18 (or 18') with respect to the overclad tubes.

Suitable blocking means at the top of the preform 10 may act to maintain the top of the core rod 18 at a constant position with respect to the top of the overclad tubes, and therefore reduce or negate the possibility of preferential feeding. In a presently preferred embodiment, the outer overclad tube 20 is occluded or stepped radially inward at its top so that the inner diameter of the tube is less than the outer diameter of the core rod 18, and the top edge of the rod is in close proximity to the occluding wall of the tube 20 when the plug 22 is fixed at the lower (tapered) end portion of the tube. Thus, the core rod 18 is restrained from axial movement in either downward or upward directions with respect to the overclad tube(s) during the entire RIT fiber draw process, and a constant feed rate for both the rod and the tube through the fiber draw furnace 14 is maintained.

## Claims

1. An overclad optical fiber preform (10; 10') suitable for setting up at the mouth (12) of a vertical optical fiber draw furnace having an interior hot zone, comprising:
a core rod (18; 18');
an outer overclad tube (20) having an open distal end (16) that is formed to enter into the mouth (12) of the draw furnace, and a tube axis;
a cylindrical plug (22) dimensioned to be placed inside the open distal end (16) of the outer overclad tube (20);
means (28) for supporting the plug (22) inside the open distal end (16) of the outer overclad tube (20), wherein the plug supporting means (28) is constructed and arranged to engage a part of said distal end (16); and
the core rod (18; 18') is disposed axially inside the outer overclad tube (20) so that a lower end of the rod (18; 18') is restrained from downward movement by the plug at the distal end of the tube (20) as the distal end of the tube (20) enters the mouth (12) of the vertical draw furnace and descends into the hot zone of the furnace.

2. A preform according to claim 1, wherein the plug (22) is formed of fused silica.

3. A preform according to claim 1, wherein the distal end (16) of the outer overclad tube (20) is tapered radially inward at a determined taper angle.

4. The preform of claim 3, wherein the taper angle is about 24 degrees.

5. A preform according to claim 1, wherein at least one opening (24, 26) is formed in the wall of the outer overclad tube (20) in the vicinity of the distal end of the tube (20), the plug (22) has a transverse bore (30), and the plug supporting means includes a pin (28) dimensioned so as to engage the opening (24, 26) in said wall and the bore (30) in the plug (22) for retaining the plug (22) at the distal end of the tube (20).

6. The preform of claim 5, wherein the pin (28) is formed of fused silica.

7. A preform according to claim 1, wherein the core rod (18) and the outer overclad tube (20) are dimensioned so that a radial clearance of about 1 mm is formed when the rod (18) is inserted in the tube (20).

8. A preform according to claim 1, including an inner overclad tube (60) arranged coaxial with and intermediate the core rod (18') and the outer overclad tube (20).

9. The preform of claim 8, wherein the core rod (18) and the inner overclad tube (60) are dimensioned and arranged so that a lower end of the inner overclad tube (60) and the lower end of the core rod (18') are restrained by said plug(22) from downward movement with respect to the outer overclad tube (20).

10. A method of drawing an optical fiber, comprising:
inserting a core rod (18; 18') axially inside an outer overclad tube (20);
inserting a cylindrical plug (22) in an open distal end (16) of the outer overclad tube (20);
providing means (28) for supporting the plug (22) inside the open distal end (16) of the outer overclad tube (20);
engaging the plug supporting means (28) with a part of the distal end (16) of the outer overclad tube (20) so as to fix the plug (22) inside the distal end of the outer overclad tube (20);
positioning the distal end of the outer overclad tube (20) for entry into a mouth (12) of a vertical fiber draw furnace having a hot zone;
lowering the outer overclad tube (20) with the inserted core rod (18:18') and the plug (22) into the hot zone of the draw furnace;
heating the distal end of the outer overclad tube (20) in the hot zone until the plug (22) and the tube (20) soften and fuse with one another;
collapsing the outer overclad tube (20) onto the core rod (18:18') in the region of the hot zone of the draw furnace; and
producing a drop comprised of the core rod and the outeroverclad tube (20) for initiating a draw of an optical fiber having desired properties.

11. The method of claim 10, wherein the plug supporting means includes a pin (28), and fixing the plug (22) at the lower distal end of the outer overclad tube (20) by inserting the pin (28) through the plug (22) and at least one opening (24, 26) formed in the wall of the distal end (16) of the tube (20).

12. The method of claim 11, including softening and fusing the pin (28) with the plug (22) and the distal end (16) of the outer overclad tube (20) when the tube is heated at the hot zone of the draw furnace.

13. The method of claim 10, including disposing an inner overclad tube (60) coaxial with and intermediate the core rod (18') and the outer overclad tube )20) prior to positioning the distal end of the outer overclad tube (20) for entry into the mouth (12) of the draw furnace.

14. The method of claim 10, including communicating a partial vacuum into a gap between the core rod (18; 18') and the outer overclad tube (20) to facilitate the collapsing step.

15. The method of claim 14, including restraining upward movement of the core rod (18; 18') with respect to the outer overclad tube (20) during the heating and the collapsing steps.

16. The method of claim 10, including maintaining the outer overclad tube (20) with the inserted core rod (18; 18') and plug (22) free of heat treatment at an elevated temperature prior to lowering of the tube into the hot zone of the draw furnace.

17. A method of manufacturing an optical fiber preform, comprising:
inserting a core rod (18; 18') axially inside an outer overclad tube (20);
inserting a cylindrical plug (22) inside an open distal end (16) of the outer overclad tube (20);
providing means (28) for supporting the plug (22) inside the distal end (16) of the outer overclad tube (20);
engaging the plug supporting means (28) with a part of the distal end (16) of the outer overclad tube (20) so as to fix the plug (22) inside said distal end (16);
positioning the distal end (16) of the outer overclad tube (20) for entry into a mouth (12) of a furnace;
lowering the outer overclad tube (20) with the inserted core rod and the plug (22) into the furnace;
heating the distal end (16) of the outer overclad tube (20) in the furnace until the plug (22) and the tube (20) soften and fuse with one another; and
collapsing the outer overclad tube (20) onto the core rod inside the furnace.

18. The method of claim 17, wherein the plug supporting means includes a pin (28), and fixing the plug (22) at the distal end (16) of the outer overclad tube (20) by inserting the pin (28) through the plug (22) and at least one opening (24, 26) formed in the wall of the distal end (16) of the tube (20).

19. The method of claim 18, including softening and fusing the pin (28) with the plug (22) and the distal end (16) of the outer overclad tube (20) when the tube (20) is heated inside the furnace.

20. The method of claim 17, including disposing an inner overclad tube (60) coaxial with and intermediate the core rod (18') and the outer overclad tube (20) prior to positioning the distal end (16) of the outer overclad tube (20) for entry into the mouth of the furnace.

21. The method of claim 17, including communicating a partial vacuum into a gap between the core rod (18; 18') and the outer overclad tube (20) to facilitate the collapsing step.

22. The method of claim 21, including restraining upward movement of the core rod (18; 18') with respect to the outer overclad tube (20) during the heating and the collapsing steps.

## Patentansprüche

1. Eine Ummantelungsvorform (10; 10') einer optischen Faser, die zum Einrichten an der Mündung (12) eines Vertikaloptikfaserziehofens geeignet ist, der eine innere Heißzone aufweist, wobei die Vorform folgende Merkmale aufweist:
einen Kernstab (18; 18');
eine äußere Ummantelungsröhre (20), die ein offenes distales Ende (16), das gebildet ist, um in die Mündung (12) des Ziehofens einzutreten, und eine Röhrenachse aufweist;
einen zylindrischen Stöpsel (22), der dimensioniert ist, um in das offene distale Ende (16) der äußeren Ummantelungsröhre (20) platziert zu werden;
eine Einrichtung (28) zum Halten des Stöpsels (22) in dem offenen distalen Ende (16) der äußeren Ummantelungsröhre (20), wobei die Stöpselhalteeinrichtung (28) aufgebaut und angeordnet ist, um einen Teil des distalen Endes (16) in Eingriff zu nehmen; und
wobei der Kernstab (18; 18') axial in der äußeren Ummantelungsröhre (20) angeordnet ist, so dass ein unteres Ende des Stabes (18; 18') durch den Stöpsel an dem distalen Ende der Röhre (20) von einer Abwärtsbewegung abgehalten wird, wenn das distale Ende der Röhre (20) in die Mündung (12) des Vertikalziehofens eintritt und sich in die Heißzone des Ofens hinunterbewegt.

2. Eine Vorform gemäß Anspruch 1, bei der der Stöpsel (22) aus Quarzglas gebildet ist.

3. Eine Vorform gemäß Anspruch 1, bei der das distale Ende (16) der äußeren Ummantelungsröhre (20) sich in einem bestimmten Verjüngungswinkel radial nach innen verjüngt.

4. Die Vorform gemäß Anspruch 3, bei der der Verjüngungswinkel etwa 24° beträgt.

5. Eine Vorform gemäß Anspruch 1, bei der zumindest eine Öffnung (24, 26) in der Wand der äußeren Ummantelungsröhre (20) in der Nähe des distalen Endes der Röhre (20) gebildet ist, der Stöpsel (22) eine Querbohrung (30) aufweist, und die Stöpselhalteeinrichtung einen Stift (28) umfasst, der dimensioniert ist, um die Öffnung (24, 26) in der Wand und die Bohrung (30) in dem Stöpsel (22) in Eingriff zu nehmen, um den Stöpsel (22) an dem distalen Ende der Röhre (20) zu halten.

6. Die Vorform gemäß Anspruch 5, bei der der Stift (28) aus Quarzglas gebildet ist.

7. Eine Vorform gemäß Anspruch 1, bei der der Kernstab (18) und die äußere Ummantelungsröhre (20) so dimensioniert sind, dass ein radialer Abstand von etwa 1 mm gebildet wird, wenn der Stab (18) in die Röhre (20) eingeführt wird.

8. Eine Vorform gemäß Anspruch 1, die eine innere Ummantelungsröhre (60) umfasst, die koaxial mit dem Kernstab (18') und der äußeren Ummantelungsröhre (20) und zwischen denselben angeordnet ist.

9. Die Vorform gemäß Anspruch 8, bei der der Kernstab (18) und die innere Ummantelungsröhre (60) so dimensioniert und angeordnet sind, dass ein unteres Ende der inneren Ummantelungsröhre (60) und das untere Ende des Kernstabs (18') durch den Stöpsel (22) von einer Abwärtsbewegung bezüglich der äußeren Ummantelungsröhre (20) abgehalten werden.

10. Ein Verfahren zum Ziehen einer optischen Faser, das folgende Schritte aufweist:
axiales Einführen eines Kernstabs (18; 18') in eine äußere Ummantelungsröhre (20);
Einführen eines zylindrischen Stöpsels (22) in ein offenes distales Ende (16) der äußeren Ummantelungsröhre (20);
Bereitstellen einer Einrichtung (28) zum Halten des Stöpsels (22) in dem offenen distalen Ende (16) der äußeren Ummantelungsröhre (20);
Ineingriffbringen der Stöpselhalteeinrichtung (28) mit einem Teil des distalen Endes (16) der äußeren Ummantelungsröhre (20), um den Stöpsel (22) in dem distalen Ende der äußeren Ummantelungsröhre (20) zu befestigen;
Positionieren des distalen Endes der äußeren Ummantelungsröhre (20) zum Eintritt in eine Mündung (12) eines Vertikalfaserziehofens, der eine Heißzone aufweist;
Hinunterbewegen der äußeren Ummantelungsröhre (20) mit dem eingeführten Kernstab (18; 18') und dem Stöpsel (22) in die Heißzone des Ziehofens;
Erhitzen des distalen Endes der äußeren Ummantelungsröhre (20) in der Heißzone, bis der Stöpsel (22) und die Röhre (20) weich werden und miteinander verschmelzen;
Zusammenfallenlassen der äußeren Ummantelungsröhre (20) auf den Kernstab (18; 18') in der Region der Heißzone des Ziehofens; und
Erzeugen eines Tropfens, der aus dem Kernstab und der äußeren Ummantelungsröhre (20) gebildet ist, zum Einleiten eines Ziehens einer optischen Faser, die gewünschte Eigenschaften aufweist.

11. Das Verfahren gemäß Anspruch 10, bei dem die Stöpselhalteeinrichtung einen Stift (28) umfasst, und Befestigen des Stöpsels (22) an dem unteren distalen Ende der äußeren Ummantelungsröhre (20) durch ein Einführen des Stifts (28) durch den Stöpsel (22) und zumindest eine Öffnung (24, 26), die in der Wand des distalen Endes (16) der Röhre (20) gebildet ist.

12. Das Verfahren gemäß Anspruch 11, das ein Weichmachen und Verschmelzen des Stiftes (28) mit dem Stöpsel (22) und dem distalen Ende (16) der äußeren Ummantelungsröhre (20) umfasst, wenn die Röhre an der Heißzone des Ziehofens erhitzt wird.

13. Das Verfahren gemäß Anspruch 10, das ein Anordnen einer inneren Ummantelungsröhre (60) koaxial mit dem Kernstab (18') und der äußeren Ummantelungsröhre (20) und zwischen denselben vor dem Positionieren des distalen Endes der äußeren Ummantelungsröhre (20) zum Eintritt in die Mündung (12) des Ziehofens umfasst.

14. Das Verfahren gemäß Anspruch 10, das ein Übertragen eines Teilvakuums in einen Zwischenraum zwischen dem Kernstab (18; 18') und der äußeren Ummantelungsröhre (20) umfasst, um den Zusammenfallschritt zu erleichtern.

15. Das Verfahren gemäß Anspruch 14, das ein Unterdrücken einer Aufwärtsbewegung des Kernstabs (18; 18') bezüglich der äußeren Ummantelungsröhre (20) während des Erhitzungs- und des Zusammenfallschritts umfasst.

16. Das Verfahren gemäß Anspruch 10, das ein Freihalten der äußeren Ummantelungsröhre (20) mit dem eingeführten Kernstab (18; 18') und dem Stöpsel (22) von einer Wärmebehandlung bei einer erhöhten Temperatur vor dem Hinunterbewegen der Röhre in die Heißzone des Ziehofens umfasst.

17. Ein Verfahren zum Herstellen einer Vorform einer optischen Faser, das folgende Schritte aufweist:
axiales Einführen eines Kernstabs (18; 18') in eine äußere Ummantelungsröhre (20);
Einführen eines zylindrischen Stöpsels (22) in ein offenes distales Ende (16) der äußeren Ummantelungsröhre (20);
Bereitstellen einer Einrichtung (28) zum Halten des Stöpsels (22) in dem distalen Ende (16) der äußeren Ummantelungsröhre (20);
Ineingriffbringen der Stöpselhalteeinrichtung (28) mit einem Teil des distalen Endes (16) der äußeren Ummantelungsröhre (20), um den Stöpsel (22) in dem distalen Ende (16) zu befestigen;
Positionieren des distalen Endes (16) der äußeren Ummantelungsröhre (20) zum Eintritt in eine Mündung (12) eines Ofens;
Hinunterbewegen der äußeren Ummantelungsröhre (20) mit dem eingeführten Kernstab und dem Stöpsel (22) in den Ofen;
Erhitzen des distalen Endes (16) der äußeren Ummantelungsröhre (20) in dem Ofen, bis der Stöpsel (22) und die Röhre (20) weich werden und miteinander verschmelzen; und
Zusammenfallenlassen der äußeren Ummantelungsröhre (20) auf den Kernstab in dem Ofen.

18. Das Verfahren gemäß Anspruch 17, bei dem die Stöpselhalteeinrichtung einen Stift (28) umfasst, und Befestigen des Stöpsels (22) an dem distalen Ende (16) der äußeren Ummantelungsröhre (20) durch ein Einführen des Stiftes (28) durch den Stöpsel (22) und zumindest eine Öffnung (24, 26), die in der Wand des distalen Endes (16) der Röhre (20) gebildet ist.

19. Das Verfahren gemäß Anspruch 18, das ein Weichmachen und Verschmelzen des Stiftes (28) mit dem Stöpsel (22) und dem distalen Ende (16) der äußeren Ummantelungsröhre (20) umfasst, wenn die Röhre (20) in dem Ofen erhitzt wird.

20. Das Verfahren gemäß Anspruch 17, das ein Anordnen einer inneren Ummantelungsröhre (60) koaxial mit dem Kernstab (18') und der äußeren Ummantelungsröhre (20) und zwischen denselben vor dem Positionieren des distalen Endes (16) der äußeren Ummantelungsröhre (20) zum Eintritt in die Mündung des Ofens umfasst.

21. Das Verfahren gemäß Anspruch 17, das ein übertragen eines Teilvakuums in einen Zwischenraum zwischen dem Kernstab (18; 18') und der äußeren Ummantelungsröhre (20) umfasst, um den Zusammenfallschritt zu erleichtern.

22. Das Verfahren gemäß Anspruch 21, das ein Unterdrücken einer Aufwärtsbewegung des Kernstabs (18; 18') bezüglich der äußeren Ummantelungsröhre (20) während des Erhitzungs- und des Zusammenfallschritts umfasst.

## Revendications

1. Préforme pour fibre optique surrevêtue (10 ; 10') convenant pour être préparée à l'embouchure (12) d'un four d'étirage de fibre optique vertical présentant une zone chaude intérieure, comprenant :
une tige de noyau (18 ; 18') ;
un tube surrevêtu extérieur (20) présentant une extrémité distale ouverte (16) qui est formée de manière à entrer dans l'embouchure (12) du four d'étirage, et un axe de tube ;
un bouchon cylindrique (22) dimensionné de manière à être placé à l'intérieur de l'extrémité distale ouverte (16) du tube surrevêtu extérieur (20) ;
un moyen (28) pour supporter le bouchon (22) à l'intérieur de l'extrémité distale ouverte (16) du tube surrevêtu extérieur (20), dans laquelle le moyen de support de bouchon (28) est construit et disposé de manière à venir en prise avec une partie de ladite extrémité distale (16) ; et
la tige de noyau (18 ; 18') est disposée axialement à l'intérieur du tube surrevêtu extérieur (20) de sorte qu'une extrémité inférieure de la tige (18 ; 18') soit empêchée de se déplacer vers le bas, par le bouchon à l'extrémité distale du tube (20), au fur et à mesure que l'extrémité distale du tube (20) entre dans l'embouchure (12) du four d'étirage vertical, et de descendre dans la zone chaude du four.

2. Préforme selon la revendication 1, dans laquelle le bouchon (22) est formé en silice fondue.

3. Préforme selon la revendication 1, dans laquelle l'extrémité distale (16) du tube surrevêtu extérieur (20) est effilé radialement vers l'intérieur selon un angle de cône déterminé.

4. Préforme selon la revendication 3, dans laquelle l'angle de cône est d'environ 24 degrés.

5. Préforme selon la revendication 1, dans laquelle au moins une ouverture (24, 26) est formée dans la paroi du tube surrevêtu extérieur (20) à proximité de l'extrémité distale du tube (20), le bouchon (22) présente un alésage transversal (30), et le moyen de support de bouchon comporte une goupille (28) dimensionnée de manière à s'engager dans l'ouverture (24, 26) dans ladite paroi et dans l'alésage (30) dans le bouchon (22), pour retenir le bouchon (22) à l'extrémité distale du tube (20).

6. Préforme selon la revendication 5, dans laquelle la goupille (28) est réalisée en silice fondue.

7. Préforme selon la revendication 1, dans laquelle la tige de noyau (18) et le tube surrevêtu extérieur (20) sont dimensionnés de sorte que soit formé un espace radial d'environ 1 mm lorsque la tige (18) est introduite dans le tube (20).

8. Préforme selon la revendication 1, comportant un tube surrevêtu intérieur (60) disposé coaxial à et intermédiaire entre la tige de noyau (18') et le tube surrevêtu extérieur (20).

9. Préforme selon la revendication 8, dans laquelle la tige de noyau (18) et le tube surrevêtu intérieur (60) sont dimensionnés et disposés de sorte qu'une extrémité inférieure du tube surrevêtu intérieur (60) et l'extrémité inférieure de la tige de noyau (18') soient empêchés par ledit bouchon (22) de se déplacer vers bas par rapport au tube surrevêtu extérieur (20).

10. Procédé d'étirage d'une fibre optique, comprenant :
introduire une tige de noyau (18 ; 18') axialement à l'intérieur d'un tube surrevêtu extérieur (20) ;
introduire un bouchon cylindrique (22) dans une extrémité distale ouverte (16) du tube surrevêtu extérieur (20) ;
prévoir un moyen (28) pour supporter le bouchon (22) à l'intérieur de l'extrémité distale ouverte (16) du tube surrevêtu extérieur (20) ;
amener le moyen de support de bouchon (28) en prise avec une partie de l'extrémité distale (16) du tube surrevêtu extérieur (20), de manière à fixer le bouchon (22) à l'intérieur de l'extrémité distale du tube surrevêtu extérieur (20) ;
positionner l'extrémité distale du tube surrevêtu extérieur (20) pour l'entrée dans une embouchure (12) d'un four d'étirage de fibre vertical présentant une zone chaude ;
faire descendre le tube surrevêtu extérieur (20) avec la tige de noyau introduite (18 ; 18') et le bouchon (22) à la zone chaude du four d'étirage ;
chauffer l'extrémité distale du tube surrevêtu extérieur (20) dans la zone chaude, jusqu'à ce que le bouchon (22) et le tube (20) se ramollissent et fondent l'un avec l'autre ;
écraser le tube surrevêtu extérieur (20) sur la tige de noyau (18 ;18') dans la région de la zone chaude du four d'étirage ; et
produire une goutte composée de la tige de noyau et du tube surrevêtu extérieur (20), pour initier une étirage d'une fibre optique ayant les propriétés désirées.

11. Procédé selon la revendication 10, dans lequel le moyen de support de bouchon comporte une goupille (28), et fixer le bouchon (22) à l'extrémité distale inférieure du tube surrevêtu extérieur (20) en introduisant la goupille (28) dans le bouchon (22) et au moins une ouverture (24, 26) formée dans la paroi de l'extrémité distale (16) du tube (20).

12. Procédé selon la revendication 11, comportant le ramollissement et la fusion de la goupille (28) avec le bouchon (22) et l'extrémité distale (16) du tube surrevêtu extérieur (20) lorsque le tube est chauffé dans la zone chaude du four d'étirage.

13. Procédé selon la revendication 10, comprenant la disposition d'un tube surrevêtu intérieur (60) coaxialement à et intermédiaire entre la tige de noyau (18') et le tube surrevêtu extérieur (20) avant de positionner l'extrémité distale du tube surrevêtu extérieur (20) pour l'entrée dans l'embouchure (12) du four d'étirage.

14. Procédé selon la revendication 10, comprenant la communication d'un vide partiel à un espace entre la tige de noyau (18 ; 18') et le tube surrevêtu extérieur (20), pour faciliter l'étape d'écrasement.

15. Procédé selon la revendication 14, comprenant l'empêchement d'un déplacement vers le haut de la tige de noyau (18 ; 18') par rapport au tube surrevêtu extérieur (20) pendant les étapes de chauffage et d'écrasement.

16. Procédé selon la revendication 10, comprenant le maintien du tube surrevêtu extérieur (20) avec la tige de noyau introduite (18 ; 18') et le bouchon (22) exempt du traitement thermique à une température élevée avant de faire descendre le tube dans la zone chaude du four d'étirage.

17. Procédé de fabrication d'une préforme de fibre optique, comprenant :
introduire une tige de noyau (18 ; 18') axialement à l'intérieur d'un tube surrevêtu extérieur (20) ;
introduire un bouchon cylindrique (22) à l'intérieur d'une extrémité distale ouverte (16) du tube surrevêtu extérieur (20) ;
prévoir un moyen (28) pour supporter le bouchon (22) à l'intérieur de l'extrémité distale (16) du tube surrevêtu extérieur (20) ;
amener le moyen de support de bouchon (28) en prise avec une partie de l'extrémité distale (16) du tube surrevêtu extérieur (20), de manière à fixer le bouchon (22) à l'intérieur de ladite extrémité distale (16) ;
positionner l'extrémité distale (16) du tube surrevêtu extérieur (20) pour l'entrée dans une embouchure (12) d'un four ;
faire descendre le tube surrevêtu extérieur (20) avec la tige de noyau introduite et le bouchon (22) dans le four ;
chauffer l'extrémité distale (16) du tube surrevêtu extérieur (20) dans le four, jusqu'à ce que le bouchon (22) et le tube (20) se ramollissent et se fondent l'un avec l'autre ; et
écraser le tube surrevêtu extérieur (20) sur la tige de noyau à l'intérieur du four.

18. Procédé selon la revendication 17, dans lequel le moyen de support de bouchon comporte une goupille (28), et fixer le bouchon (22) à l'extrémité distale (16) du tube surrevêtu extérieur (20) en introduisant la goupille (28) dans le bouchon (22) et au moins une ouverture (24, 26) formée dans la paroi de l'extrémité distale (16) du tube (20).

19. Procédé selon la revendication 18, comprenant le ramollissement et la fusion de la goupille (28) avec le bouchon (22) et l'extrémité distale (16) du tube surrevêtu extérieur (20) lorsque le tube (20) est chauffé à l'intérieur du four.

20. Procédé selon la revendication 17, comprenant la disposition d'un tube surrevêtu intérieur (60) coaxialement à et intermédiaire entre la tige de noyau (18') et le tube surrevêtu extérieur (20) avant de positionner l'extrémité distale (16) du tube surrevêtu extérieur (20) pour l'entrée dans l'embouchure du four.

21. Procédé selon la revendication 17, comprenant la communication d'un vide partiel à un espace entre la tige de noyau (18 ; 18') et le tube surrevêtu extérieur (20), pour faciliter l'étape d'écrasement.

22. Procédé selon la revendication 21, comprenant l'empêchement d'un déplacement vers le haut de la tige de noyau (18 ; 18') par rapport au tube surrevêtu extérieur (20) pendant les étapes de chauffage et d'écrasement.
